# EUROPÄISCHE PATENTSCHRIFT

(11) **EP 2 986 960 B1**
(45) Veröffentlichungstag und Bekanntmachung des Hinweises auf die Patenterteilung: **27.09.2017**
(21) Anmeldenummer: 14724456.0
(22) Anmeldetag: 16.05.2014
(51) Int. Cl.: G01K 7/20, G01K 7/24

(54) **TEMPERATURMESSUNG AUF HOCHSPANNUNGSPOTENZIAL**
TEMPERATURE MEASUREMENT AT HIGH-VOLTAGE POTENTIAL
MESURE DE TEMPÉRATURE À UN POTENTIEL HAUTE TENSION

(30) Priorität: 04.06.2013 DE 102013210297
(43) Veröffentlichungstag der Anmeldung: 24.02.2016
(73) Patentinhaber: Siemens Aktiengesellschaft, 80333 München (DE)
(72) Erfinder: RICHTER, Markus, 07747 Jena (DE); WILLSCH, Michael, 07745 Jena (DE)
(86) Internationale Anmeldenummer: PCT/EP2014/060039
(87) Internationale Veröffentlichungsnummer: WO 2014/195109

(56) Entgegenhaltungen:
- DE-C2- 4 443 646
- DE-T5-112010 003 387
- US-A- 5 008 525
- US-A1- 2004 190 811

## Beschreibung

Die Erfindung betrifft eine Anordnung zur Temperaturmessung auf Hochspannungspotenzial mit einem elektronischen Temperatursensor, der die Temperatur eines optischen Stromwandlers misst und der durch eine Lichtquelle mit elektrischer Energie versorgt wird.

Optische Stromwandler sind seit langer Zeit bekannt. Generell wird unter einem Stromwandler ein Messwandler verstanden, der einen Sensorkopf zum potenzialfreien Messen von Wechselströmen aufweist. Optische Stromwandler machen sich zur Messung den Faraday-Effekt zu nutze. Der Faraday-Effekt beschreibt die Drehung der Polarisation einer linear polarisierten elektromagnetischen Welle beim Durchlaufen eines transparenten Mediums, an das ein zeitlich konstantes magnetisches Feld parallel zur Ausbreitungsrichtung der Welle angelegt ist.

Zunehmend werden optische Stromwandler auch auf Hochspannungspotenzial eingesetzt. Ein solcher optischer Stromwandler ist beispielweise aus der DE 198 02 191 B4 bekannt.

Der Faraday-Effekt ist im Allgemeinen temperaturabhängig, da die Drehung der polarisierten Welle von den Materialeigenschaften des transparenten Mediums abhängig ist, und sich diese mit der Temperatur ändern. Wird bei der Auswertung der Messung die Temperaturabhängigkeit nicht berücksichtigt, so kann dies zu Messfehlern bei den ermittelten Messwerten für den Wechselstrom führen. Um solche Messfehler zu kompensieren wird nach dem Stand der Technik eine zusätzliche Temperaturmessung auf Hochspannungspotenzial durchgeführt. Die Messung der Temperatur kann hierbei sowohl elektronisch als auch optisch erfolgen.

Optische Temperatursensoren sind beispielsweise Sensoren auf der Basis von Faser-Bragg-Gittern. Auch Sensoren mit Halbleiterelementen, die als temperaturabhängige optische Bandkantenfilter fungieren oder Sensoren, welche die temperaturabhängige Abklingzeit der Fluoreszenz von Kristallen nutzen, sind bekannt. Der Nachteil optischer Temperatursensoren liegt in ihrer im Vergleich zu elektronischen Sensoren höheren Komplexität.

Aus der DE 11 2010 003 387 T5 ist eine optischer Stromwandler bekannt, dessen Temperatur mittels solcher optischer Temperatursensoren gemessen wird.

Elektronische Temperatursensoren sind nach dem Stand der Technik digitale Sensoren, die mittels Mikroprozessoren ausgeführt sind. Solche auf einer digitalen Signalverarbeitung basierende Temperatursensoren benötigen eine hohe Betriebsspannung, die im Bereich von einigen Volt liegt. Zudem müssen sie stetig mit ausreichend elektrischer Energie versorgt werden.

Um den Bedarf an elektrischer Energie zu decken sind bei der digitalen Messung der Temperatur auf Hochspannungspotenzial Sensoren bekannt, die mittels eines Lichtwellenleiters zur Erfüllung der Messaufgabe mit Energie versorgt werden. Hierbei wird Licht eines leistungsstarken Lasers von einer Bodenstation mittels des Lichtwellenleiters zum optischen Stromwandler geleitet. Typischerweise werden leistungsstarke Laser mit einer Leistung im Bereich von 100 mW bis 500 mW verwendet um genügend Energie für die digitale Temperaturmessung bereitzustellen. Innerhalb des Stromwandlers oder des Temperatursensors befindet sich eine Anordnung bestehend aus einer Mehrzahl von Fotoempfängern, die das Licht des Lasers in elektrische Energie zum Betrieb des digitalen Temperatursensors umwandeln. Nach Erfüllung der Messaufgabe wird das Messsignal über einen weiteren Lichtwellenleiter zurück zur Bodenstation geführt. Aufgrund der großen hohen optischen Leistung der verwendeten Laser muss stets für eine ausreichende Betriebssicherheit gesorgt werden.

Aus der DE 44 43 646 A1 ist eine derartige Anordnung mit einem Sensor für ein elektrisches Hochspannung-Schaltgerät bekannt, wobei der Sensor ein elektrischer Temperatur-Meßwertaufnehmer ist. Die für den Betrieb des Sensors erforderliche Energie wird mittels einer Mehrzahl von Lichtleitern und einer Mehrzahl von Fotodioden bereitgestellt.

Der vorliegenden Erfindung liegt die Aufgabe zugrunde, eine Anordnung für einen optischen Stromwandler auf Hochspannungspotenzial mit einer elektronischen Temperaturmessung zu schaffen, bei dem der Temperatursensor einfach aufgebaut ist, zuverlässig funktioniert und bei dem die elektronische Temperaturmessung einen geringen Energiebedarf hat.

Die Aufgabe wird durch eine Anordnung mit den Merkmalen des unabhängigen Anspruches gelöst. In davon abhängigen Ansprüchen sind vorteilhafte Ausgestaltungen und Weiterbildungen der Erfindung angegeben.

Die erfindungsgemäße Anordnung zur Messung der Temperatur auf Hochspannungspotenzial umfasst einen optischen Stromwandler auf Hochspannungspotenzial, einen elektronischen Temperatursensor zur Messung der Temperatur des Stromwandlers, genau eine Fotodiode, einen ersten Lichtwellenleiter zur Führung von Licht von einer ersten Lichtquelle zur Fotodiode und einen zweiten Lichtwellenleiter zur Übertragung des Messsignals zu einer Bodenstation.

Gemäß der Erfindung wird die Energie, die zum Betrieb des elektronischen Temperatursensors nötig ist, durch die eine Fotodiode zur Verfügung gestellt. Zur Energieversorgung wird vorteilhafterweise Licht verwendet, das durch den ersten Lichtwellenleiter von der ersten Lichtquelle zur Fotodiode der Aufbau einfach gestaltet werden, da sich die Anzahl der Bauelemente reduziert.

Erfindungsgemäß ist weiterhin der elektronische Temperatursensor ein Schwingkreis mit einem temperaturabhängigen Widerstand. Die Eigenfrequenz/Resonanzfrequenz des Schwingkreises hängt von seiner Dämpfung, die durch den temperaturabhängigen Widerstand dominiert ist, ab. Im Allgemeinen nimmt die Eigenfrequenz eines Schwingkreises mit steigender Dämpfung ab. Ändert sich der Widerstandswert des temperaturanhängigen Widerstandes durch die Temperatur des Stromwandlers, so verschiebt sich die Eigenfrequenz. Somit ist die Eigenfrequenz ein Maß für die Temperatur.

Besonders vorteilhaft an der genannten analogen Ausführungsform ist, dass hierfür ein im Vergleich zu digitalen Messungen geringer Energiebedarf nötig ist. Der Bedarf an elektrischer Energie kann somit durch die eine Fotodiode gedeckt werden.

In einer besonders vorteilhaften Ausgestaltung ist innerhalb des Stromkreises des Schwingkreises eine zweite Lichtquelle, insbesondere eine LED angebracht. Dadurch leuchtet die zweite Lichtquelle periodisch mit einer Frequenz, die der Eigenfrequenz des Schwingkreises entspricht. Die Eigenfrequenz des Schwingkreises hängt von der Temperatur ab, so dass die Frequenz der zweiten Lichtquelle ein analoges Maß für die gemessene Temperatur darstellt. Das analoge optische Signal der zweiten Lichtquelle kann dann über den zweiten Lichtwellenleiter zur Bodenstation übertagen werden.

Vorteilhafterweise besitzt der elektronische Temperatursensor einen Kondensator zur Speicherung elektrischer Energie und eine Steuereinheit zur Bestimmung eines Zeitraumes der Speicherung der elektrischen Energie. Das Licht der ersten Lichtquelle wird von der Lichtquelle zur Fotodiode geführt, die dieses Licht nutzt um elektrische Energie zu erzeugen. Die durch die Fotodiode erzeugte elektrische Energie wird vorteilhafterweise im Kondensator gespeichert. Dadurch kann die erste Lichtquelle als Lichtquelle geringer Leistung ausgebildet sein. Von besonderem Vorteil ist, dass der Kondensator eine Temperaturmessung in zeitlichen Intervallen ermöglicht. Dadurch sinkt der Verbrauch an elektrischer Energie, da für die Temperaturmessung beispielsweise eine Messung pro Minute ausreichend ist.

In einer vorteilhaften Weiterbildung ist die Lichtleistung der ersten Lichtquelle kleiner oder gleich 5 mW. Besonders vorteilhaft ist eine Leistung kleiner oder gleich 1 mW. Dadurch kann der Temperatursensor durch ein niedriges Leistungsniveau versorgt werden. Reicht die geringe Leistung nicht zur Erfüllung der Messaufgabe, so kann vorteilhafterweise eine Speicherung im Energiespeicher erfolgen bis genügend Energie zur Verfügung steht. Zweckmäßig ist es einen Laser im sichtbaren Bereich von 400 nm bis 700 nm als erste Lichtquelle zu verwenden. Liegt die Leistung des verwendeten Lasers unter 1 mW, so ist der Laser der zweiten Laserschutzklasse zugehörig. Es müssen daher keine besonderen Vorsichtsmaßnahmen getroffen werden. Dadurch kann der Aufbau als auch die Handhabung wesentlich vereinfacht werden.

In einer vorteilhaften Ausgestaltung ist die erste Lichtquelle als LED ausgebildet. Besonders vorteilhaft ist, dass diese kostengünstig sind und dennoch ausreichend Energie zur Versorgung des Temperatursensors oder zur Füllung des Energiespeichers zur Verfügen stellen.

Der Temperatursensor kann innerhalb des optischen Stromwandlers integriert sein. Vorteilhafterweise in unmittelbarer Nähe zum Sensorkopf des Stromwandlers. Dadurch kann die Temperaturabhängigkeit des Faraday-Effektes wesentlich besser kompensiert werden.

In einer besonders vorteilhaften Weiterbildung nutzt der Temperatursensor bereits vorhandene Lichtwellenleiter des optischen Stromwandlers.

Der erste und zweite Lichtwellenleiter des Temperatursensors können Standard-Mehrfachmoden-Lichtwellenleiter sein. Insbesondere können Lichtwellenleiter deren Kerndurchmesser im Bereich von 50 µm bis 62 µm liegt verwendet werden. Selbst mit solchen geringen Durchmessern des Kerns kann noch genügen Energie für den Betrieb des erfindungsgemäßen Temperatursensors bereitgestellt werden.

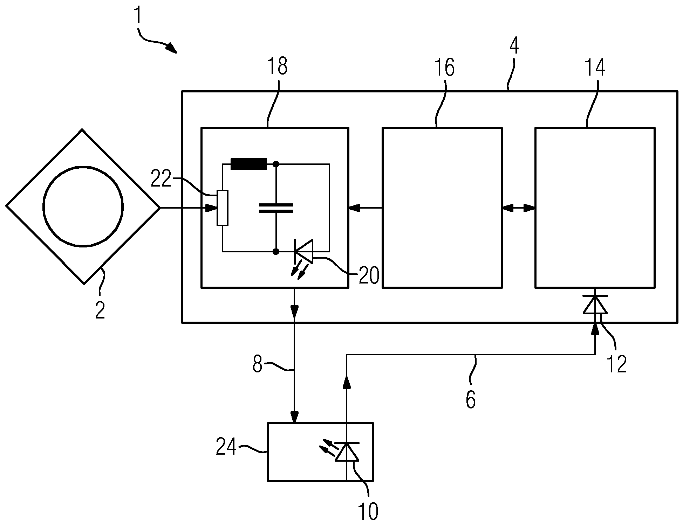

Die Erfindung wird nachfolgend anhand eines bevorzugten Ausführungsbeispiels unter Bezugnahme auf die angehängte Zeichnung beschrieben, in der
Figur 1 eine Anordnung zur analogen Temperaturmessung eines optischen Stromwandlers auf Hochspannungspotenzial zeigt.

Figur 1 zeigt eine Anordnung 1 zur Temperaturmessung auf Hochspannungspotenzial, die einen optischen Stromwandler 2, einen elektronischen Temperatursensor 4, einen ersten und zweiten Lichtwellenleiter 6, 8 und eine erste Leuchtdiode 10 umfasst, die sich innerhalb einer Bodenstation 24 befindet. Weiterhin umfasst der Temperatursensor 4 genau eine Fotodiode 12, einen Kondensator 14, eine Steuereinheit 16 und einen Schwingkreis 18. Innerhalb des Stromkreises des Schwingkreises 18 befindet sich zudem eine zweite LED 20 und ein temperaturabhängiger Widerstand 22. Hierbei kann der Widerstand 22 beispielweise ein Thermistor, ein PT100, ein Thermoelement oder auch ein Halbleitersensor sein.

Licht der ersten Leuchtdiode 10 wird über den ersten Lichtwellenleiter 6 zur Fotodiode 12 innerhalb des elektronischen Temperatursensors 4 geführt. Vorzugsweise können die Lichtwellenleiter 6, 8 Standard-Mehrfachmoden-Lichtwellenleiter oder 200/220 µm Hard-Clading-Silica Lichtwellenleiter sein. Besonders vorteilhaft sind Standard-Mehrfachmoden-Lichtwellenleiter mit einem Kerndurchmesser von 50 µm oder 62 µm. Die erste Leuchtdiode 10 weist eine geringe Leistung kleiner gleich 5 mW auf. Besonders vorteilhaft ist eine Leistung kleiner gleich 1 mW. Diese geringe Leistung reicht typischerweise nicht für die Messung der Temperatur des optischen Stromwandlers 2, so dass die in der Fotodiode 12 erzeugte elektrische Energie im Kondensator 14 für einen durch die Steuereinheit 16 bestimmten Zeitraum gespeichert wird. Während der Füllung des Kondensators 14 wird die erste Leuchtdiode 10 stetig betrieben. Die Steuereinheit 16 legt fest, wann die gespeicherte elektrische Energie für die Erfüllung der Messaufgabe ausreicht und stellt dann dem Schwingkreis 18 die im Kondensator 14 gespeicherte elektrische Energie zur Messung der Temperatur zur Verfügung. Beispielsweise ist eine Entladung des Kondensators 14 pro Minute ausreichend.

Erfindungsgemäß erfolgt die analoge und somit energiesparende Verarbeitung der Temperaturmessung mittels des Schwingkreises 18. Die Eigenfrequenz des Schwingkreises 18 hängt vom temperaturabhängigen Widerstand 22 ab. Die zweite LED 20 wird mit der Spannung des Schwingkreises 18 betrieben. Dadurch leuchtet diese periodisch mit der temperaturabhängigen Eigenfrequenz des Schwingkreises 18. Die Frequenz der zweiten LED 20 ist daher ein Maß für die Temperatur des Stromwandlers 2. Das periodische Licht der zweiten LED 20 wird dann anschließend mittels des zweiten Lichtwellenleiters 8 zur Bodenstation 24 übermittelt.

Wird die Messung der Temperatur durch Verwendung von Mikroprozessoren digital realisiert, so genügt typischerweise die Spannung der Fotodiode 12 nicht zum Erfüllen der Messaufgabe. Es ist daher zweckmäßig einen Aufwärtswandler zur Erhöhung der Spannung einzusetzen.

Generell kann das Messsignals der Temperatur auch als ein pulsweitemoduliertes optisches Signal mittels des zweiten Lichtwellenleiter 8 zur Bodenstation 24 geführt werden.

## Patentansprüche

1. Anordnung (1) zur Messung der Temperatur auf Hochspannungspotenzial, umfassend
- einen optischen Stromwandler (2) auf Hochspannungspotenzial,
- einen elektronischen Temperatursensor (4) zur Messung der Temperatur des Stromwandlers (2),
- einen ersten Lichtwellenleiter (6) zur Energieversorgung des elektronischen Temperatursensors (4),
- einen zweiten Lichtwellenleiter (8) zur Datenübertragung des Messsignals des elektronischen Temperatursensors (4) zu einer Bodenstation (24),
- und eine erste Lichtquelle (10),
wobei der elektronische Temperatursensor (4) genau eine Fotodiode (12) umfasst und der erste Lichtwellenleiter (6) zur Führung von Licht von der Lichtquelle (10) zur Fotodiode (12) ausgebildet ist, wobei der Temperatursensor (4) als elektrischer Schwingkreis (18) ausgebildet ist, wobei der Schwingkreis (18) einen temperaturabhängigen Widerstand (22) umfasst.

2. Anordnung (1) nach Anspruch 1, **dadurch gekennzeichnet, dass** der Schwingkreis (18) eine zweite Lichtquelle (20), insbesondere eine LED umfasst.

3. Anordnung (1) nach Anspruch 2, **dadurch gekennzeichnet, dass** der elektronische Temperatursensor (4) wenigstens einen Kondensator (14) zur Speicherung elektrischer Energie und eine Steuereinheit (16) zur Bestimmung eines Zeitraumes der Speicherung der elektrischen Energie umfasst.

4. Anordnung (1) nach einem der vorangegangenen Ansprüche, **dadurch gekennzeichnet, dass** die Lichtleistung der ersten Lichtquelle (10) kleiner gleich 5 mW, insbesondere kleiner gleich 1 mW ist.

5. Anordnung (1) nach einem der vorangegangenen Ansprüche, **dadurch gekennzeichnet, dass** die erste Lichtquelle (10) eine LED ist.

6. Anordnung (1) nach einem der vorangegangenen Ansprüche, **dadurch gekennzeichnet, dass** der Temperatursensor (4) innerhalb eines Sensorkopfes des Stromwandlers (2) integriert ist.

7. Anordnung (1) nach einem der vorangegangenen Ansprüche, **dadurch gekennzeichnet, dass** der erste und der zweite Lichtwellenleiter (6, 8) als Standard-Mehrfachmoden-Fasern ausgebildet sind.

## Claims

1. Arrangement (1) for measuring the temperature at high-voltage potential, comprising
- an optical current transformer (2) at high-voltage potential,
- an electronic temperature sensor (4) for measuring the temperature of the current transformer (2),
- a first optical waveguide (6) for the energy supply of the electronic temperature sensor (4),
- a second optical waveguide (8) for the data transmission of the measurement signal of the electronic temperature sensor (4) to a ground station (24),
- and a first light source (10),
wherein the electronic temperature sensor (4) comprises exactly one photodiode (12) and the first optical waveguide (6) is designed for guiding light from the light source (10) to the photodiode (12), wherein the temperature sensor (4) is designed as an electrical resonant circuit (18), wherein the resonant circuit (18) comprises a temperature-dependent resistor (22).

2. Arrangement (1) according to Claim 1, **characterized in that** the resonant circuit (18) comprises a second light source (20), in particular an LED.

3. Arrangement (1) according to Claim 2, **characterized in that** the electronic temperature sensor (4) comprises at least one capacitor (14) for storing electrical energy and a control unit (16) for determining a time period for storing the electrical energy.

4. Arrangement (1) according to any of the preceding claims, **characterized in that** the light power of the first light source (10) is less than or equal to 5 mW, in particular less than or equal to 1 mW.

5. Arrangement (1) according to any of the preceding claims, **characterized in that** the first light source (10) is an LED.

6. Arrangement (1) according to any of the preceding claims, **characterized in that** the temperature sensor (4) is integrated within a sensor head of the current transformer (2).

7. Arrangement (1) according to any of the preceding claims, **characterized in that** the first and second optical waveguides (6, 8) are designed as standard multimode fibers.

## Revendications

1. Agencement (1) de mesure de la température à un potentiel de haute tension, comprenant
- un transformateur (2) optique d'intensité à un potentiel de haute tension,
- une sonde (4) électronique de température pour la mesure de la température du transformateur (2) d'intensité,
- une première fibre (6) optique pour l'alimentation en énergie de la sonde (4) électronique de température,
- une deuxième fibre (8) optique pour la transmission de données du signal de mesure de la sonde (4) électronique de température à un poste (24) au sol,
- et une première source (10) lumineuse,
dans lequel la sonde (4) électronique de température comprend exactement une photodiode (12) et la première fibre (6) optique est constituée pour guider de la lumière de la source (10) lumineuse à la photodiode (12), la sonde (4) de température étant constituée en circuit (18) électrique oscillant, le circuit (18) oscillant comprenant une résistance (22) qui dépend de la température.

2. Agencement (1) suivant la revendication 1, **caractérisé en ce que** le circuit (18) oscillant comprend une deuxième source (20) lumineuse, notamment une DEL.

3. Agencement (1) suivant la revendication 2, **caractérisé en ce que** la sonde (4) électronique de température comprend au moins un condensateur (14) d'accumulation d'énergie électrique et une unité (16) de commande pour déterminer une durée de l'accumulation de l'énergie électrique.

4. Agencement (1) suivant l'une des revendications précédentes, **caractérisé en ce que** la puissance lumineuse de la première source (10) lumineuse est inférieure ou égale à 5 mW, en étant notamment inférieure ou égale à 1 mW.

5. Agencement (1) suivant l'une des revendications précédentes, **caractérisé en ce que** la première source (10) lumineuse est une DEL.

6. Agencement (1) suivant l'une des revendications précédentes, **caractérisé en ce que** la sonde (4) de température est intégrée au sein d'une tête de sonde du transformateur (2) d'intensité.

7. Agencement (1) suivant l'une des revendications précédentes, **caractérisé en ce que** la première et la deuxième fibres (6, 8) lumineuses sont constituées sous la forme de fibres multimodes standards.
